# EUROPEAN PATENT APPLICATION

(11) **EP 4 822 228 A1**
(43) Date of publication of application: **14.10.2026**
(21) Application number: 25169616.7
(22) Date of filing: 10.04.2025
(51) Int. Cl.: F16K 31/124, F16K 31/42, G05D 16/20

(54) **PRESSURE LIMITING VALVE FOR A COMMERCIAL VEHICLE AND METHOD OF OPERATING A PRESSURE LIMITING VALVE FOR A COMMERCIAL VEHICLE**

(71) Applicant: ZF CV Systems Europe BV, 1170 Brüssel (BE)
(72) Inventor: OWSIAK, Kamil, 50-506 Wroclaw (PL)
(74) Representative: Copi, Joachim

(57) **Abstract**

A pressure limiting valve (10) for a commercial vehicle is provided which is electronically controllable. The pressure limiting valve (10) comprises a casing (11). The casing comprises a supply conduit (13) configured to receive gas (G), a circuit conduit (14) configured to provide the gas (G) to a pneumatic circuit of the commercial vehicle, a control conduit (16), and an exhaust (15). The pressure limiting valve (10) comprises a shut-off element (30) disposed in the casing (11) and displaceable to selectively allow the gas to flow from the supply conduit (13) to the circuit conduit (14). The pressure limiting valve (10) comprises a solenoid (41) disposed in or projecting into the casing (11) and energizable to selectively cause the displacement of the shut-off element (30). Techniques of operating the pressure limiting valve (10) are also disclosed.

## Description

The invention relates to components for pneumatic systems of commercial vehicles. The invention relates in particular to a pressure limiting valve configured to limit a pressure in a pneumatic circuit of a commercial vehicle and techniques of operating the pressure limiting valve.

Pneumatic systems are used in commercial vehicles in a wide variety of applications, including air dryer systems, pneumatic suspension, pneumatic levelling, door actuation systems, and/or braking systems of commercial vehicles. A pressure limiting valve is an important component to ensure safety and functionality of pneumatic systems in commercial vehicles. The pressure limiting valve is operative to prevent a pressure within a pneumatic circuit of the commercial vehicle from exceeding a limit. The pressure limiting valve is configured to ensure that the system operates within a safe range, protecting various components from damage that could otherwise result from excessive pressure.

In addition to being configured to enhance safety, the pressure limiting valve contributes to the efficiency of pneumatic operations. By contributing to maintaining consistent pressure, the pressure limiting valve is configured to contribute to reliable and predictable functioning of the pneumatic system. This contributes to ensuring stability and control of the commercial vehicle under various operating conditions. Thus, the pressure limiting valve is critical for both performance and safety.

EP 3 502 824 A1, WO 2014/086615 A1, and US 2010/0243079 A1 disclose pressure limiting valves.

Conventional pressure limiting valves for commercial vehicles often have a configuration in which a mechanical operation principle controls at what pressures the valve opens and/or closes. This can result in various shortcomings. For illustration, there can be issues associated with pressure drift over time that can be caused by wear. This can affect opening, closing, and limiting pressures of a conventional pressure limiting valve. For further illustration, conventional pressure limiting valves can have a complex construction to implement the mechanical operation principle that sets the opening, closing, and/or limiting pressures. This increased complexity has the potential to adversely affect the robustness of the pressure limiting valve. For still further illustration, conventional pressure limiting valves can introduce delays caused by the mechanical operation principle that implements the opening and closing process in such conventional pressure limiting valves. In addition, conventional pressure limiting valves cannot be readily adapted to accommodate different opening, closing, or limiting pressures. This limits the versatility of use of any given pressure limiting valve design.

There is a continued need in the art for an improved pressure limiting valve for a commercial vehicle and a technique of operating such a pressure limiting valve. There is in particular a continued need in the art for a pressure limiting valve for a commercial vehicle that provides enhanced characteristics, e.g., with regard to pressure drift, and that has a simple and robust construction. It is an optional object to provide such a pressure limiting valve for a commercial vehicle and operation techniques that provide adaptability to different desired operation characteristics. It is a further optional object to provide such a pressure limiting valve and operation technique that allow different pressure thresholds to be set more easily as compared to conventional pressure limiting valves.

According to aspects of the invention, a pressure limiting valve for a commercial vehicle and a method of operating a pressure limiting valve for a commercial vehicle as recited in the independent claims are provided. The dependent claims define preferred embodiments.

According to an aspect of the invention, there is provided a pressure limiting valve for a commercial vehicle. The pressure limiting valve comprises a casing. The casing comprises a supply conduit configured to receive gas (such as air), a circuit conduit configured to provide the gas to a pneumatic circuit of the commercial vehicle, a control conduit, and an exhaust. The pressure limiting valve comprises a shut-off element disposed in the casing. The shut-off element is displaceable between a first position in which the shut-off element is configured to block the gas from flowing from the supply conduit to the circuit conduit and a second position in which the shut-off element is configured to allow the gas to flow from the supply conduit to the circuit conduit. The pressure limiting valve comprises a bias element configured to apply a bias force to the shut-off element to bias the shut-off element into the first position. The pressure limiting valve comprises a mechanism that is electronically controllable and configured to cause a displacement of the shut-off element for selective performance of at least: (a) a filling function of providing the gas to the circuit conduit; and (b) a pressure limiting function of limiting pressure in the pneumatic circuit. The mechanism comprises a solenoid disposed in or projecting into the casing. The mechanism is configured to, for performance of the filling function, establish fluid communication of the control conduit with the supply conduit to cause displacement of the shut-off element to the second position against the bias force, wherein the mechanism is configured to enable, by means of the fluid communication, an increase of a gas pressure acting on a surface portion of the shut-off element to cause the displacement of the shut-off element to the second position. The mechanism is configured to, for performance of at least the pressure limiting function, fluidly communicate the control conduit with the exhaust to exhaust the control conduit to enable the bias force to return the shut-off element to the first position.

Various effects are attained by the pressure limiting valve for a commercial vehicle. The pressure limiting valve is electronically controllable. This allows the filling and limiting functions to be performed by energizing and de-energizing the solenoid, respectively. The configuration and operation reduces delays that can be associated with conventional pressure limiting valve constructions that rely exclusively on mechanical operation principles for opening and closing the valve. The provision of the solenoid to control at what points in time the control conduit is fluidly communicated, in a selectively manner, with one of the supply conduit and the exhaust also allows the pressure limiting valve to have a simpler construction as compared to conventional pressure limiting valves. The simpler construction contributes to robustness durability. The electronic controllability, which is attained by the mechanism comprising the solenoid, also provides improved adaptability, as compared to conventional pressure limiting valve designs that do not allow opening and closing pressures to be readily varied.

Preferably, the mechanism is or comprises a solenoid valve comprising the solenoid, the solenoid valve further comprising a solenoid valve body that is selectively displaceable between: a first solenoid valve state in which the solenoid valve body is positioned in the casing so as to establish fluid communication of the control conduit with the supply conduit while concurrently blocking fluid communication between the control conduit and the exhaust; and a second solenoid valve state in which the solenoid valve body is positioned in the casing so as to establish fluid communication of the control conduit with the exhaust while concurrently blocking fluid communication between the control conduit and the supply conduit.

Thereby, the pressure limiting valve has a simple, robust, and compact configuration.

Preferably, the solenoid valve comprises a solenoid valve spring configured to bias the solenoid valve towards the second solenoid valve state.

Thereby, energy efficient operation is attained, as the solenoid is to be energized selectively for opening the pressure limiting valve to allow the gas to flow to the circuit conduit.

Preferably, the solenoid valve body may be slidably supported in the casing such that it has a solenoid valve body displacement direction that is orthogonal to a shut-off element displacement direction along which the shut-off element is displaceable.

Thereby, the pressure limiting valve has a compact and robust configuration.

Preferably, the pressure limiting valve comprises control electronics configured to control the solenoid (e.g., by energizing and de-energizing the solenoid) based on at least one pressure selected from a group comprising: a supply pressure sensed by a first pressure sensor; a pneumatic circuit pressure sensed by a second pressure sensor.

Thereby, the pressure limiting valve is configured to perform at least the filling function and the pressure limiting function taking into account the supply pressure and/or the pneumatic circuit pressure sensed by the first and/or second pressure sensor(s). This further contributes to maintaining a consistent operation, reducing the risk of issues that could otherwise result from pressure drift.

Preferably, the control electronics comprises a non-volatile memory and/or storage unit configured to store threshold comparison data that specify at least one threshold comparison, wherein the control electronics is configured to perform the at least one threshold comparison of the at least one pressure to determine at what point(s) in time and/or at what pressure(s) the solenoid is to be energized and/or de-energized.

Thereby, the pressure limiting valve is configured to perform at least the filling function and the pressure limiting function based on threshold comparison(s) of the supply pressure and/or the pneumatic circuit pressure. This further contributes to maintaining a consistent operation, reducing the risk of issues that could otherwise result from pressure drift.

Preferably, the at least one threshold comparison is configurable to adjust operation of the pressure limiting valve.

Thereby, operation characteristics of the pressure limiting valve are adaptable so that pressures at which the pressure limiting valve opens for performing the filling function and closes to perform the pressure limiting function can be adjusted, without having to alter the physical configuration of the pressure limiting valve.

Preferably, the mechanism is configured to establish the fluid communication of the control conduit with the supply conduit to cause displacement of the shut-off element to the second position for performance of a refilling function, based on the at least one threshold comparison.

Thereby, the pressure limiting valve can also provide the refilling function.

Preferably, the control electronics comprises a data interface and is configured to adjust the threshold comparison data based on data received at the data interface.

Thereby, operation characteristics of the pressure limiting valve are adaptable by means of interfacing with the control electronics over the data interface.

Preferably, the control electronics is configured to receive the data that adjusts the threshold comparison data during manufacture and/or upon installation in the commercial vehicle and/or after installation in the commercial vehicle.

Thereby, the threshold comparison(s) may be modified when desired to adjust the pressure at which the pressure limiting valve opens for performance of the filling function and/or the pressure at which the pressure limiting valve closes for performance of the pressure limiting function.

Preferably, the threshold comparison data comprises instruction code that is executable by at least one programmable circuit of the control electronics.

Thereby, the control electronics can be configured, using executable instruction code (such as firmware, software, and/or other instruction code, such as instructions for a field programmable gate array), to ensure that the pressure limiting valve has the desired operation characteristics.

Preferably, the threshold comparison data comprises a first threshold, the at least one pressure comprises the supply pressure, and the control electronics is configured to energize the solenoid, based on a comparison of the supply pressure and the first threshold, for performance of the filling function.

Thereby, the points in time and/or pressure(s) at which the pressure limiting valve opens for performance of the filling function are determined based on a comparison of the supply pressure and the first threshold. The control electronics may energize or cause energization of the solenoid to trigger opening of the pressure limiting valve, to cause the gas to flow from the supply conduit to the circuit conduit. The desired pressure limiting valve operation characteristics are attained using electronic control, thereby contributing to a simple and robust construction of the pressure limiting valve.

Preferably, the control electronics is configured to energize the solenoid responsive to determining that the supply pressure reaches or exceeds the first threshold, for performance of the filling function.

Thereby, the points in time and/or pressure(s) at which the pressure limiting valve opens for performance of the filling function are determined in a manner that ensures that the pressure limiting valve opens only responsive to a confirmation that the supply pressure reaches or exceeds the first threshold.

Preferably, the threshold comparison data comprises a second threshold different from the first threshold, the at least one pressure comprises the pneumatic circuit pressure, and the control electronics is configured to deenergize the solenoid, based on a further comparison of the pneumatic circuit pressure and the second threshold, for performance of the pressure limiting function.

Thereby, the points in time and/or pressure(s) at which the pressure limiting valve closes for performance of the pressure limiting function are determined based on a comparison of the pneumatic circuit pressure and the second threshold. The control electronics may deenergize or cause de-energization of the solenoid to trigger closing of the pressure limiting valve, to block the gas from flowing from the supply conduit to the circuit conduit. The desired pressure limiting valve operation characteristics are attained using electronic control, thereby contributing to a simple and robust construction of the pressure limiting valve.

Preferably, the control electronics is configured to deenergize the solenoid responsive to determining that the pneumatic circuit pressure reaches the second threshold for performance of the pressure limiting function.

Thereby, the points in time and/or pressure(s) at which the pressure limiting valve closes (by blocking the gas from flowing from the supply conduit to the circuit conduit) to limit the pressure in the pneumatic circuit are determined in a manner that limits the pressure in the pneumatic circuit in an efficient manner.

Preferably, the threshold comparison data comprises a third threshold different from the first threshold and the second threshold, the at least one pressure comprises the pneumatic circuit pressure, and the control electronics is configured to energize the solenoid, based on a comparison of the pneumatic circuit pressure and the third threshold, for refilling the pneumatic circuit.

Thereby, the points in time and/or pressure(s) at which the pressure limiting valve is opened for refilling of the pneumatic circuit are determined based on a comparison of the pneumatic circuit pressure and the third threshold. The control electronics may energize or cause energization of the solenoid to trigger opening of the pressure limiting valve, to allow the gas to flow from the supply conduit to the circuit conduit. The desired pressure limiting valve operation characteristics are attained using electronic control, thereby contributing to a simple and robust construction of the pressure limiting valve.

Preferably, the pressure limiting valve is configured to perform re-filling of the pneumatic circuit under action of the solenoid valve. The pressure limiting valve may be configured such that, responsive to the pressure in the pneumatic circuit or the circuit conduit reaching or falling below a limit pressure (which represents a lower limit for a desired pressure in the pneumatic circuit), the solenoid valve is configured to establish fluid communication of the control conduit with the supply conduit to cause the displacement of the shut-off element to the second position against the bias force to allow the gas in the pneumatic circuit to be replenished through the pressure limiting valve.

Thereby, the pressure limiting valve is configured for replenishment of the gas in the pneumatic circuit during ongoing use. The limit pressure at which replenishment is initiated is set such that it is not indicative of a leak, but merely indicates a reduction in gas, e.g., due to consumption in the pneumatic circuit.

Preferably, the pressure limiting valve is configured to perform a protection function to block the gas from flowing from the supply conduit to the pneumatic circuit conduit responsive to detecting a gas leak in the pneumatic circuit.

Thereby, the pressure limiting valve can contribute to reducing an outflow of the gas through the gas leak in the pneumatic circuit. This contributes to enhanced efficiency of using gas provided by a pump, compressor, or other pressure gas source.

Preferably, the at least one pressure comprises the pneumatic circuit pressure, and the control electronics is configured to perform a gas leak detection based on the pneumatic circuit pressure and to deenergize the solenoid based on the gas leak detection. Alternatively or additionally, the control electronics is preferably configured to, responsive to detecting the gas leak, block energization of the solenoid while the solenoid is deenergized.

Thereby, the pressure limiting valve can contribute to reducing an outflow of the gas through the gas leak in the pneumatic circuit by causing the pressure limiting valve to return to, and/or remain in, a state in which the gas is blocked from flowing from the supply conduit to the circuit conduit. This contributes to enhanced efficiency of using gas provided by a pump, compressor, or other pressure gas source.

Preferably, the shut-off element has a further surface portion permanently exposed to the supply pressure in the supply conduit, the further surface portion being dimensioned such that a product of an area of the further surface portion and a maximum working pressure providable to the supply conduit (e.g., in accordance with the specification of the pressure limiting valve and/or in accordance with a compressor with which the pressure limiting valve is useable) is less than the bias force.

Thereby, the pressure limiting valve is operative such that it blocks fluid from flowing between the supply conduit and the circuit conduit for performance of the protection function, while a compressor that is directly or indirectly connected to the supply conduit can continue its pumping operation. This is advantageous when the compressor is to provide pressure gas to several pneumatic circuits that can have different circuit pressures.

Alternatively, the pressure limiting valve may optionally be configured to cause a compressor that is operative to provide the gas to the supply conduit to stop a pumping operation responsive to detecting the gas leak and/or responsive to confirming that the pressure limiting valve has been closed because of the gas leak detection.

Thereby, energy efficient operation is attained by discontinuing a pumping operation when there is a gas leak in the pneumatic circuit. However, for a vehicle operation in which the compressor supplies pressurized gas to other pneumatic circuits in addition to the pneumatic circuits, it is preferable for the compressor to continue pumping (as described in the previous paragraphs) to increase the working pressure for the other pneumatic circuits to a desired target working pressure (e.g., a maximum working pressure) again.

Optionally, the control electronics may comprise an interface (such as a data interface, e.g., for coupling to a data bus and/or electrical line connectors) to provide a control output to cause the compressor to stop the pumping operation.

Thereby, energy efficient operation is attained by discontinuing a pumping operation when there is a gas leak in the pneumatic circuit. However, for a vehicle operation in which the compressor supplies pressurized gas to other pneumatic circuits in addition to the pneumatic circuits, it is preferable for the compressor to continue pumping (as described in the previous paragraphs) to increase the working pressure for the other pneumatic circuits to a desired target working pressure (e.g., a maximum working pressure) again.

Preferably, the control electronics is housed in the casing or attached to the casing.

Thereby, ease of installation is attained. The casing, which can house the control electronics or to which the control electronics may be attached, can be mounted as an integral unit.

Preferably, the control electronics is provided separately from the casing.

Thereby, greater flexibility in positioning the control electronics is attained. This can also contribute to ease of installation.

Preferably, the pressure limiting valve comprises the first pressure sensor and the second pressure sensor. The first pressure sensor is arranged at or in fluid communication with the supply conduit. The second pressure sensor is arranged at or in fluid communication with the circuit conduit.

Thereby, the acquisition of the supply pressure and the pneumatic circuit pressure can be realized.

Preferably, the first pressure sensor and the second pressure sensor are housed in the casing or attached to the casing.

Thereby, ease of installation is attained. The casing, which can house the first and second pressure sensors and/or to which the first and second pressure sensors may be attached, can be mounted as an integral unit.

Preferably, the first pressure sensor and the second pressure sensor are provided separately from the casing.

Thereby, greater flexibility in positioning the first and second pressure sensors is attained. This can also contribute to ease of installation.

According to a further aspect of the invention, there is provided control electronics for the pressure limiting valve according to any aspect or embodiment. The control electronics are configured to control the solenoid (e.g., by energizing and de-energizing the solenoid) of the pressure limiting valve based on at least one pressure selected from a group comprising: a supply pressure sensed by a first pressure sensor; a pneumatic circuit pressure sensed by a second pressure sensor.

Thereby, the control electronics is configured to control the solenoid for performance of at least the filling function and the pressure limiting function taking into account the supply pressure and/or the pneumatic circuit pressure sensed by the first and/or second pressure sensor(s). This contributes to maintaining a consistent operation, reducing the risk of issues that could otherwise result from pressure drift.

Preferably, the control electronics comprises a non-volatile memory and/or storage unit configured to store threshold comparison data that specify at least one threshold comparison, wherein the control electronics is configured to perform the at least one threshold comparison of the at least one pressure to determine at what point(s) in time and/or pressure(s) the solenoid is to be energized and/or de-energized.

Thereby, the control electronics is configured to perform at least the filling function and the pressure limiting function based on threshold comparison(s) of the supply pressure and/or the pneumatic circuit pressure. This contributes to maintaining a consistent operation, reducing the risk of issues that could otherwise result from pressure drift.

Preferably, the at least one threshold comparison is configurable to adjust operation of the pressure limiting valve.

Thereby, the control electronics is configured to adapt operation characteristics of the pressure limiting valve so that pressures at which the pressure limiting valve opens for performing the filling function and closes to perform the pressure limiting function can be adjusted, without having to alter the physical configuration of the pressure limiting valve.

Preferably, the control electronics comprises a data interface and is configured to adjust the threshold comparison data based on data received at the data interface.

Thereby, operation characteristics of the pressure limiting valve are adaptable by means of interfacing with the control electronics over the data interface.

Preferably, the control electronics is configured to receive the data that adjusts the threshold comparison data during manufacture and/or upon installation in the commercial vehicle and/or after installation in the commercial vehicle.

Thereby, the threshold comparison(s) may be modified when desired to adjust the pressure at which the pressure limiting valve opens for performance of the filling function and/or the pressure at which the pressure limiting valve closes for performance of the pressure limiting function.

Preferably, the threshold comparison data comprises instruction code that is executable by at least one programmable circuit of the control electronics.

Thereby, the control electronics can be configured, using executable instruction code (such as firmware, software, and/or other instruction code, such as instructions for a field programmable gate array) to ensure that the pressure limiting valve has the desired operation characteristics.

Preferably, the threshold comparison data comprises a first threshold, the at least one pressure comprises the supply pressure, and the control electronics is configured to energize the solenoid, based on a comparison of the supply pressure and the first threshold, for performance of the filling function.

Thereby, the points in time and/or pressure(s) at which the control electronics causes the pressure limiting valve to open for performance of the filling function are determined based on a comparison of the supply pressure and the first threshold. The control electronics may energize or cause energization of the solenoid to trigger opening of the pressure limiting valve, to cause the gas to flow from the supply conduit to the circuit conduit. The desired pressure limiting valve operation characteristics are attained using electronic control, thereby contributing to a simple and robust construction of the pressure limiting valve.

Preferably, the control electronics is configured to energize the solenoid responsive to determining that the supply pressure reaches or exceeds the first threshold, for performance of the filling function.

Thereby, the points in time and/or pressure(s) at which the control electronics causes the pressure limiting valve to open for performance of the filling function are determined in a manner that ensures that the pressure limiting valve opens only responsive to a confirmation that the supply pressure reaches or exceeds the first threshold.

Preferably, the threshold comparison data comprises a second threshold different from the first threshold, the at least one pressure comprises the pneumatic circuit pressure, and the control electronics is configured to deenergize the solenoid, based on a further comparison of the pneumatic circuit pressure and the second threshold, for performance of the pressure limiting function.

Thereby, the points in time and/or pressure(s) at which the control electronics causes the pressure limiting valve to close for performance of the pressure limiting function are determined based on a comparison of the pneumatic circuit pressure and the second threshold. The control electronics may deenergize or cause de-energization of the solenoid to trigger closing of the pressure limiting valve, to block the gas from flowing from the supply conduit to the circuit conduit. The desired pressure limiting valve operation characteristics are attained using electronic control, thereby contributing to a simple and robust construction of the pressure limiting valve.

Preferably, the control electronics is configured to deenergize the solenoid responsive to determining that the pneumatic circuit pressure reaches the second threshold for performance of the pressure limiting function.

Thereby, the points in time and/or pressure(s) at which the control electronics causes the pressure limiting valve to close (by blocking the gas from flowing from the supply conduit to the circuit conduit) to limit the pressure in the pneumatic circuit are determined in a manner that limits the pressure in the pneumatic circuit in an efficient manner.

Preferably, the at least one pressure comprises the pneumatic circuit pressure, and the control electronics is configured to perform a gas leak detection based on the pneumatic circuit pressure and to deenergize the solenoid based on the gas leak detection. Alternatively or additionally, the control electronics is preferably configured to, responsive to detecting the gas leak, block energization of the solenoid while the solenoid is deenergized.

Thereby, the control electronics is operative to control the pressure limiting valve to contribute to reducing an outflow of the gas through the gas leak in the pneumatic circuit by causing the pressure limiting valve to return to, and/or remain in, a state in which the gas is blocked from flowing from the supply conduit to the circuit conduit. This contributes to enhanced efficiency of using gas provided by a pump, compressor, or other pressure gas source.

Preferably, the threshold comparison data comprises a third threshold different from the first threshold and the second threshold, the at least one pressure comprises the pneumatic circuit pressure, and the control electronics is configured to energize the solenoid, based on a comparison of the pneumatic circuit pressure and the third threshold, for refilling the pneumatic circuit.

Thereby, the points in time and/or pressure(s) at which the pressure limiting valve is opened for refilling of the pneumatic circuit are determined based on a comparison of the pneumatic circuit pressure and the third threshold. The control electronics may energize or cause energization of the solenoid to trigger opening of the pressure limiting valve, to allow the gas to flow from the supply conduit to the circuit conduit. The desired pressure limiting valve operation characteristics are attained using electronic control, thereby contributing to a simple and robust construction of the pressure limiting valve.

Alternatively, the control electronics may comprise an interface (such as a data interface, e.g., for coupling to a data bus and/or electrical line connectors) to provide a control output to cause a compressor to stop a pumping operation that provides the gas to the supply conduit.

Thereby, energy efficient operation can be attained by initiating a discontinuation of a pumping operation when there is a gas leak in the pneumatic circuit. However, for a vehicle operation in which the compressor supplies pressurized gas to other pneumatic circuits in addition to the pneumatic circuits, it is preferable for the compressor to continue pumping (as described in the previous paragraphs) to increase the working pressure for the other pneumatic circuits to a desired target working pressure (e.g., a maximum working pressure) again.

According to a further aspect of the invention, there is provided a multi-circuit protection valve comprising several valves, wherein one or more than one of the several valves are a pressure limiting valve according to an aspect or embodiment.

Thereby, the technical benefits and advantages discussed in association with the pressure limiting valve are utilized in the multi-circuit protection valve.

According to a further aspect of the invention, there is provided a commercial vehicle system. The commercial vehicle system comprises a gas source, a pneumatic circuit, and the pressure limiting valve of any aspect or embodiment. The gas source is in direct or indirect fluid communication with the supply conduit. The pneumatic circuit is in direct or indirect fluid communication with the circuit conduit.

Thereby, the technical benefits and advantages discussed in association with the pressure limiting valve are utilized in the commercial vehicle system.

Preferably, the commercial vehicle system may further comprises one or several additional pneumatic circuits connected to receive gas from the gas source, wherein the pressure limiting valve is configured to, in case of failure of the pneumatic circuit, block fluid communication between the supply conduit and the circuit conduit to isolate the pneumatic circuit from the gas source and thereby ensure a target working pressure in the one or several additional pneumatic circuits.

Thereby, the pressure limiting valve allows the pneumatic circuit to be isolated from the compressor in case of leakage, ensuring that a target pressure (such as a supply working pressure of, e.g., 12.5 bar) is available to the one or several additional pneumatic circuits that are non-failed.

Preferably, the commercial vehicle system may be or may comprise a pneumatic or electropneumatic suspension system, pneumatic or electropneumatic levelling system, pneumatic or electropneumatic door actuation system, pneumatic or electropneumatic sensor cleaning system, and/or pneumatic or electropneumatic braking system.

Thereby, the technical benefits and advantages discussed in association with the pressure limiting valve are utilized in commercial vehicle systems in which it is particularly important to provide protection against possible excessive pressures that have the potential of damaging components of the commercial vehicle system.

According to a further aspect of the invention, there is provided a commercial vehicle, comprising the pressure limiting valve and/or the multi-circuit protection valve and/or the commercial vehicle system of any aspect or embodiment disclosed herein.

Thereby, the technical benefits and advantages discussed in association with the pressure limiting valve are utilized in the commercial vehicle.

According to a further aspect of the invention, there is provided a method of operating a pressure limiting valve for a commercial vehicle. The pressure limiting valve comprises a casing. The casing comprises a supply conduit configured to receive gas, a circuit conduit configured to provide the gas to a pneumatic circuit of the commercial vehicle, a control conduit, and an exhaust. The pressure limiting valve comprises a shut-off element disposed in the casing, the shut-off element being displaceable between a first position in which the shut-off element blocks the gas from flowing from the supply conduit to the circuit conduit and a second position in which the shut-off element allows the gas to flow from the supply conduit to the circuit conduit. The pressure limiting valve comprises a bias element that applies a bias force to the shut-off element to bias the shut-off element into the first position. The pressure limiting valve comprises a mechanism that is electronically controllable and the comprises a solenoid disposed in or projecting into the casing. The method comprises establishing, by the mechanism and for performance of a filling function in which the gas flows from the supply conduit to the circuit conduit, fluid communication of the control conduit with the supply conduit and thereby causing displacement of the shut-off element to the second position against the bias force, wherein the mechanism enables, by means of the fluid communication, an increase of a gas pressure acting on a surface portion of the shut-off element that causes the displacement of the shut-off element to the second position. The method comprises fluidly communicating, by the mechanism and for performance of at least the pressure limiting function, the control conduit with the exhaust to exhaust the control conduit to enable the bias force to return the shut-off element to the first position.

Various effects are attained by the method of operating the pressure limiting valve for a commercial vehicle. The pressure limiting valve comprises a solenoid, affording the pressure limiting valve to be electronically controlled. This allows the filling and limiting functions to be performed by energizing and de-energizing the solenoid, respectively.

The method reduces delays that can be associated with conventional pressure limiting valve constructions that rely on mechanical principles only for opening and closing the valve. The provision of the solenoid to control at what points in time and/or pressure(s) the control conduit is fluidly communicated, in a selectively manner, with one of the supply conduit and the exhaust also allows the pressure limiting valve to have a simpler construction as compared to many conventional pressure limiting valves. The simpler construction contributes to robustness and reduced complexity. The electronic controllability, which is attained by the configuration of the mechanism comprising the solenoid, also provides improved adaptability, as compared to many conventional pressure limiting valve designs that do not allow opening and closing pressures to be varied.

Preferably, the method further comprises controlling, by control electronics, the solenoid based on at least one pressure threshold comparison.

Thereby, enhanced robustness against pressure drift and enhanced temporal response characteristics are attained.

Preferably, the method comprises enabling, by the control electronics, an adaptation of the at least one pressure threshold comparison in dependence on characteristics of the pneumatic circuit and/or of a source from which the supply conduit receives the gas

Thereby, enhanced adaptability is attained, which allows one or several pressures (such as the opening, closing, and/or limiting pressures) of the pressure limiting valve to be varied without having to change the physical characteristics of the pressure limiting valve.

Preferably, the method comprises controlling, by the control electronics, the solenoid (e.g., by energizing and de-energizing the solenoid) based on at least one pressure selected from a group comprising: a supply pressure sensed by a first pressure sensor; a pneumatic circuit pressure sensed by a second pressure sensor.

Thereby, the method performs at least the filling function and the pressure limiting function taking into account the supply pressure and/or the pneumatic circuit pressure sensed by the first and/or second pressure sensor(s). This contributes to maintaining a consistent operation, reducing the risk of issues that could otherwise result from pressure drift.

Preferably, the control electronics comprises a non-volatile memory and/or storage unit storing threshold comparison data that specify at least one threshold comparison, wherein the control electronics performs the at least one threshold comparison of the at least one pressure to determine at what point(s) in time and/or pressure(s) the solenoid is to be energized and/or de-energized.

Thereby, the method performs at least the filling function and the pressure limiting function based on threshold comparison(s) of the supply pressure and/or the pneumatic circuit pressure. This further contributes to maintaining a consistent operation, reducing the risk of issues that could otherwise result from pressure drift.

Preferably, the at least one threshold comparison is configurable to adjust operation of the pressure limiting valve.

Thereby, operation characteristics of the pressure limiting valve are adaptable so that pressures at which the pressure limiting valve opens for performing the filling function and closes to perform the pressure limiting function can be adjusted, without having to alter the physical configuration of the pressure limiting valve.

Preferably, the control electronics comprises a data interface and the method comprises adjusting, by the control electronics, the threshold comparison data based on data received at the data interface.

Thereby, operation characteristics of the pressure limiting valve are adaptable over the data interface.

Preferably, the control electronics receives the data that adjusts the threshold comparison data during manufacture and/or upon installation in the commercial vehicle and/or after installation in the commercial vehicle.

Thereby, the threshold comparison(s) are modified when desired to adjust the pressure at which the pressure limiting valve opens for performance of the filling function and/or the pressure at which the pressure limiting valve closes for performance of the pressure limiting function.

Preferably, the threshold comparison data comprises instruction code that is executable by at least one programmable circuit of the control electronics.

Thereby, the executable instruction code (such as firmware, software, and/or other instruction code, such as instructions for a field programmable gate array) is used to ensure that the pressure limiting valve has the desired operation characteristics.

Preferably, the threshold comparison data comprises a first threshold, the at least one pressure comprises the supply pressure, and the control electronics energizes the solenoid, based on a comparison of the supply pressure and the first threshold, for performance of the filling function.

Thereby, the points in time and/or pressure(s) at which the pressure limiting valve opens for performance of the filling function are determined based on a comparison of the supply pressure and the first threshold. The control electronics may energize or cause energization of the solenoid to trigger opening of the pressure limiting valve, to cause the gas to flow from the supply conduit to the circuit conduit. The desired pressure limiting valve operation characteristics are attained using electronic control, thereby contributing to a simple and robust construction of the pressure limiting valve.

Preferably, the control electronics energizes the solenoid responsive to determining that the supply pressure reaches or exceeds the first threshold, for performance of the filling function.

Thereby, the points in time and/or pressure(s) at which the pressure limiting valve opens for performance of the filling function are determined in a manner that ensures that the pressure limiting valve opens only responsive to a confirmation that the supply pressure reaches or exceeds the first threshold.

Preferably, the threshold comparison data comprises a second threshold different from the first threshold, the at least one pressure comprises the pneumatic circuit pressure, and the control electronics deenergizes the solenoid, based on a further comparison of the pneumatic circuit pressure and the second threshold, for performance of the pressure limiting function.

Thereby, the points in time and/or pressure(s) at which the pressure limiting valve closes for performance of the pressure limiting function are determined based on a comparison of the pneumatic circuit pressure and the second threshold. The control electronics may deenergize or cause de-energization of the solenoid to trigger closing of the pressure limiting valve, to block the gas from flowing from the supply conduit to the circuit conduit. The desired pressure limiting valve operation characteristics are attained using electronic control, thereby contributing to a simple and robust construction of the pressure limiting valve.

Preferably, the control electronics deenergizes the solenoid responsive to determining that the pneumatic circuit pressure reaches the second threshold for performance of the pressure limiting function.

Thereby, the points in time and/or pressure(s) at which the pressure limiting valve closes (by blocking the gas from flowing from the supply conduit to the circuit conduit) to limit the pressure in the pneumatic circuit are determined in a manner that limits the pressure in the pneumatic circuit in an efficient manner.

Preferably, the method comprises performing, by the pressure limiting valve, a protection function to block the gas from flowing from the supply conduit to the pneumatic circuit conduit responsive to detecting a gas leak in the pneumatic circuit.

Thereby, the pressure limiting valve contributes to reducing an outflow of the gas through the gas leak in the pneumatic circuit. This contributes to enhanced efficiency of using gas provided by a pump, compressor, or other pressure gas source.

Preferably, the at least one pressure comprises the pneumatic circuit pressure, and the control electronics performs a gas leak detection based on the pneumatic circuit pressure and to deenergize the solenoid based on the gas leak detection. Alternatively or additionally, the control electronics is preferably configured to, responsive to detecting the gas leak, block energization of the solenoid while the solenoid is deenergized.

Thereby, the pressure limiting valve contributes to reducing an outflow of the gas through the gas leak in the pneumatic circuit by causing the pressure limiting valve to return to, and/or remain in, a state in which the gas is blocked from flowing from the supply conduit to the circuit conduit. This contributes to enhanced efficiency of using gas provided by a pump, compressor, or other pressure gas source.

Preferably, the threshold comparison data comprises a third threshold different from the first threshold and the second threshold, the at least one pressure comprises the pneumatic circuit pressure, and the method comprises energizing, by the control electronics, the solenoid, based on a comparison of the pneumatic circuit pressure and the third threshold, for refilling the pneumatic circuit.

Thereby, the points in time and/or pressure(s) at which the pressure limiting valve is opened for refilling of the pneumatic circuit are determined based on a comparison of the pneumatic circuit pressure and the third threshold. The control electronics may energize or cause energization of the solenoid to trigger opening of the pressure limiting valve, to allow the gas to flow from the supply conduit to the circuit conduit. The desired pressure limiting valve operation characteristics are attained using electronic control, thereby contributing to a simple and robust construction of the pressure limiting valve.

Preferably, the method comprises performing, by the pressure limiting valve, refilling of the pneumatic circuit under action of the solenoid valve. The method may comprise establishing, by the solenoid valve and responsive to a pressure in the pneumatic circuit or the circuit conduit reaching or falling below a limit pressure (which represents a lower limit for a desired pressure in the pneumatic circuit), fluid communication of the control conduit with the supply conduit to cause the displacement of the shut-off element to the second position against the bias force to allow the gas in the pneumatic circuit to be replenished through the pressure limiting valve.

Thereby, the pressure limiting valve is configured for replenishment of the gas in the pneumatic circuit during ongoing use. The limit pressure is set such that it is not indicative of a leak, but merely indicates a reduction in gas, e.g., due to consumption in the pneumatic circuit.

Preferably, the shut-off element has a further surface portion permanently exposed to the supply pressure in the supply conduit, the further surface portion being dimensioned such that a product of an area of the further surface portion and a maximum working pressure providable to the supply conduit (e.g., in accordance with the specification of the pressure limiting valve and/or in accordance with a compressor with which the pressure limiting valve is useable) is less than the bias force.

Thereby, the pressure limiting valve is operative such that it blocks fluid from flowing between the supply conduit and the circuit conduit for performance of the protection function, while a compressor that is directly or indirectly connected to the supply conduit can continue its pumping operation. This is advantageous when the compressor is to provide pressure gas to several pneumatic circuits that can have different circuit pressures.

Alternatively, the pressure limiting valve causes a compressor that provides the gas to the supply conduit to stop a pumping operation responsive to detecting the gas leak and/or responsive to confirming that the pressure limiting valve has been closed because of the gas leak detection.

Thereby, energy efficient operation is attained by discontinuing a pumping operation when there is a gas leak in the pneumatic circuit. However, for a vehicle operation in which the compressor supplies pressurized gas to other pneumatic circuits in addition to the pneumatic circuits, it is preferable for the compressor to continue pumping (as described in the previous paragraphs) to increase the working pressure for the other pneumatic circuits to a desired target working pressure (e.g., a maximum working pressure) again.

Preferably, in the method, the pressure limiting valve is the pressure limiting valve of any aspect or embodiment disclosed herein.

Further optional features of the method and the effects attained thereby correspond to the optional features discussed in association with the pressure limiting valve, the control electronics, the commercial vehicle system, and/or the commercial vehicle.

Preferably, the method may be performed by or using the pressure limiting valve, the control electronics, the multi-circuit protection valve, the commercial vehicle system, and/or the commercial vehicle disclosed herein.

Further embodiments and configurations are defined by the dependent claims. These and other aspects of the invention will be apparent from and further explained with reference to the embodiments described herein with reference to the accompanying drawings, in which:
Fig. 1 is a cross-sectional view of a pressure limiting valve for a commercial vehicle according to an embodiment;
Fig. 2 is a partial cross-sectional view of the pressure limiting valve;
Fig. 3 is a further partial cross-sectional view of the pressure limiting valve in a state in which the pressure limiting valve is closed;
Fig. 4 is a further partial cross-sectional view of the pressure limiting valve in a state in which the pressure limiting valve is closed but starts to open;
Fig. 5 is a pneumatic circuit diagram of the pressure limiting valve;
Fig. 6 is a further pneumatic circuit diagram of the pressure limiting valve;
Fig. 7 illustrates a first threshold comparison performed to determine whether the pressure limiting valve is to be opened;
Fig. 8 illustrates a first threshold comparison performed to determine whether the pressure limiting valve is to be closed or re-opened;
Fig. 9 illustrates a gas leak detection performed to determine whether the pressure limiting valve is to be closed;
Fig. 10 is a schematic representation of a commercial vehicle system;
Fig. 11 is a schematic representation of a vehicle comprising a pneumatic or electropneumatic braking system;
Fig. 12 is a schematic representation of a vehicle comprising a pneumatic or electropneumatic levelling system;
Fig. 13 is a schematic representation of a vehicle comprising a pneumatic or electropneumatic shock absorbing system;
Fig. 14 is a flow chart of a method of operating the pressure limiting valve;
Fig. 15 is a flow chart of a method of operating the pressure limiting valve; and
Fig. 16 is a flow chart of a use method.

Embodiments of the invention will be described with reference to the drawings. In the drawings, similar or identical reference signs designate elements with similar or identical configuration and/or function.

The invention relates to a pressure limiting valve for a commercial vehicle. The pressure limiting valve is operative to perform a filling function in which a supply conduit is fluidly communicated with a circuit conduit, to allow gas provided by a source to the supply conduit to flow to the circuit conduit. This state of the pressure limiting valve is also referred to as "open" state. The pressure limiting valve is further operative to perform a pressure limiting function to limit a pressure in a pneumatic circuit. The pressure limiting valve is configured to block the gas from flowing from the supply conduit to the circuit conduit to limit the pressure in the pneumatic circuit. This state of the pressure limiting valve is also referred to as "closed" state. The pressure limiting valve may be operative, while performing the pressure limiting function, to be opened again for refilling, i.e., replenishing gas, in the pneumatic circuit through the pressure limiting valve.

Due to the construction and requirements imposed by pneumatic circuits of commercial vehicles, a pressure limiting valve for a commercial vehicle generally has components specifically adapted for installation and operation in the commercial vehicle. Pressure limiting valves for smaller vehicles, such as cars or motorcycles, generally do not have the characteristics required for installation and operation in the commercial vehicle.

As used herein, the term "gas" encompasses a gaseous mixture. The gas may be air, without being limited thereto. The gas may be provided by a compressor and/or a reservoir of pressurized air.

As used herein, the term "pneumatic" component encompasses an electropneumatic component, and the term "pneumatic" system encompasses an electropneumatic system.

As used herein, the term "exhaust" refers to discharging of gas to ambient atmosphere.

As used herein, the term "casing" refers to a body that houses other components therein. The casing may be a unitary body or may comprise several parts attached to each other.

As used herein, the term "conduit" refers to a structure that is delimited on at least two or at least three of its sides to provide a passage for gas flow. The term conduit encompasses lines, which may be implemented as separate components located within a casing of the pressure limiting valve. The term conduit encompasses channels formed within the casing, which do not need to be implemented as separate components but may be machines into the casing.

As used herein, the term "commercial vehicle" encompasses trucks, heavy-duty trucks, traction vehicles, trailers, busses. The term "commercial vehicles" comprises vehicles having an electric drive, such as electrified trailers.

As used herein, the term "pneumatic circuit" encompasses a pneumatic suspension, pneumatic levelling, door actuation systems, and/or braking systems of commercial vehicles, without being limited thereto.

As used herein, terms such as "electronically controllable," "electronical control," etc. encompass control that is performed under the control of electronic circuitry, irrespective of whether analog signals or digital data is used to perform the control operations.

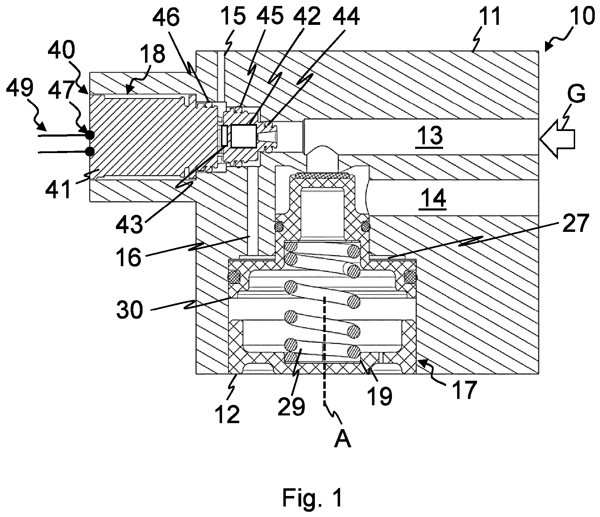

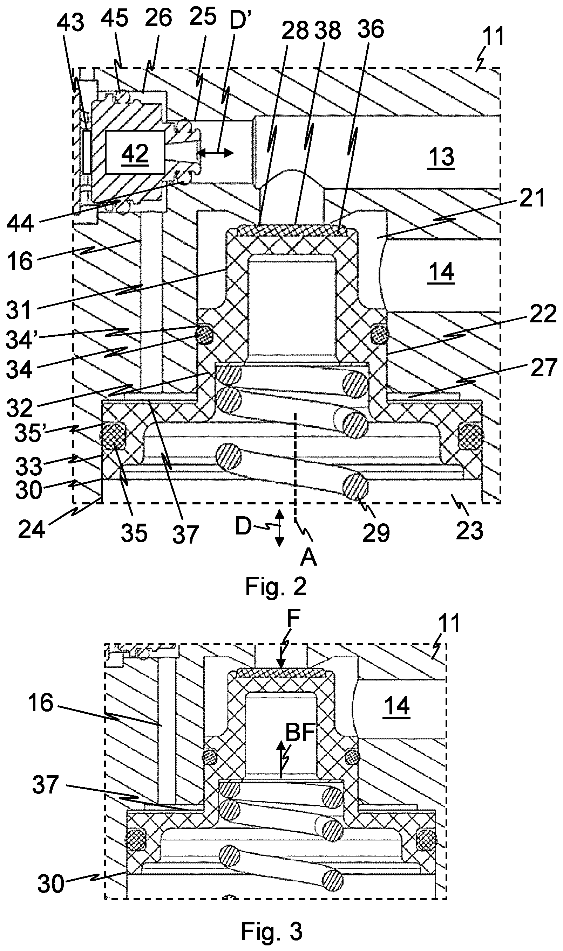

Fig. 1 is a cross-sectional view of a pressure limiting valve 10 for a commercial vehicle according to an embodiment. Fig. 2 is a partial cross-sectional view of the pressure limiting valve 10. The pressure limiting valve 10 comprises a casing 11, a shut-off element 30 (which can also be referred to as valve body 30) disposed in the casing 11, a bias element 29 disposed in the casing, and a mechanism 40 configured to effect displacement of the shut-off element 30. The casing 11 comprises a supply conduit 13, a circuit conduit 14, an exhaust 15, and a control conduit 16. The supply conduit 13, circuit conduit 14, exhaust 15, and control conduit 16 may respectively comprise gas lines and/or channels machined into the casing 11. The supply conduit 13 is configured to receive gas G from a source. The source may comprise an air processing unit, a compressor, and/or a reservoir for pressurized gas. The circuit conduit 14 is configured to provide the gas to the pneumatic circuit of the commercial vehicle, for which the pressure limiting valve 10 is to perform the pressure limiting function.

The shut-off element 30 is displaceable between the first position, in which the shut-off element 30 is configured to block the gas G from flowing from the supply conduit 13 to the circuit conduit 14, and a second position in which the shut-off element 30 is configured to allow the gas G to flow from the supply conduit 13 to the circuit conduit 14. The pressure limiting valve 10 is configured such that, when in the first position, the shut-off element 30 is engaged with a continuous annular valve seat 28 provided on an inner surface of the casing 11. The pressure limiting valve 10 is configured such that engagement of the shut-off element 30 with the valve seat 28 blocks the passage between the supply conduit 13 and the circuit conduit 14. The shut-off element 30 may comprise an engagement material portion 36 for abutment against the valve seat 28. The engagement material portion 36 may be more resilient and/or may have a lower hardness than other sections of the shut-off element 30, to enhance the sealing between the supply conduit 13 and the circuit conduit 14. The pressure limiting valve 10 is configured such that, when in the second position, the shut-off element 30 is spaced from the valve seat 28 by a gap, allowing the gas G to flow from the supply conduit 13 to the circuit conduit 14. The bias element 29, which may be a coil spring, is configured to apply a bias force to the shut-off element 30 to bias the shut-off element 30 into the first position.

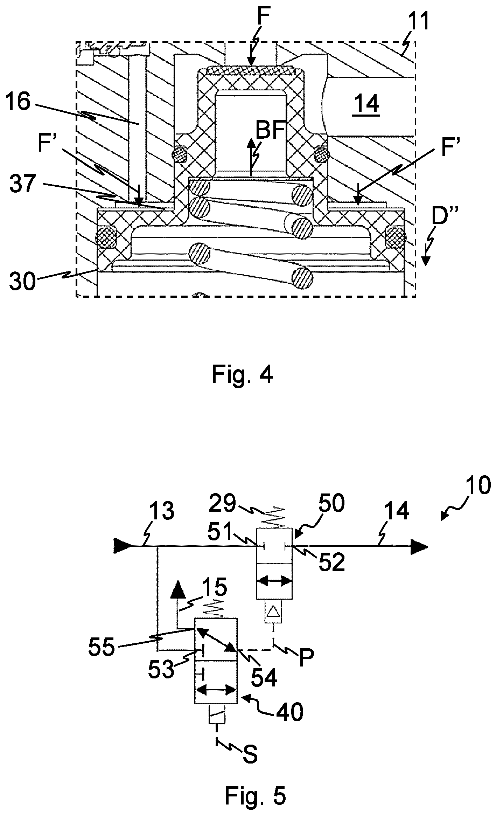

The control conduit 16 is configured to selectively provide, under control of the mechanism 40, fluid communication between the supply conduit 13 and one of an annular disc-shaped space 27 and the exhaust 15. The exhaust 15 is configured to be in permanent fluid communication with ambient atmosphere. The mechanism 40 is configured to provide fluid communication between the supply conduit 13 and the control conduit 16 for opening the pressure limiting valve 10. As will be explained in more detail with reference to Fig. 3 and Fig. 4, this fluid communication causes displacement of the shut-off element 30 away from the first position (which is the rest position of the shut-off element 30) to the second position, for performance of the filling function in which the gas G flow from the supply conduit 13 to the circuit conduit 14. The mechanism 40 is configured to provide fluid communication between the control conduit 16 and the exhaust 15 for allowing return of the shut-off element 30 to the first position, under a bias force applied by the bias element 29, for performance of a pressure limiting function and for performance of a protection function in case of gas leakage from the pneumatic circuit.

The mechanism 40 is electronically controllable. The mechanism 40 may comprise or may be a solenoid valve, comprising a solenoid 41 housed in the casing 11, a solenoid valve body 42, and a solenoid valve spring 43. The mechanism 40 is configured to cause a displacement of the shut-off element 30 for selective performance of a filling function of providing the gas to the circuit conduit; a pressure limiting function of limiting pressure in the pneumatic circuit; and a protection function of preventing, in case of a gas leak in the pneumatic circuit of the commercial vehicle, continued leakage of gas provided by the compressor through the gas leak in the pneumatic circuit. For performance of the filling function, the mechanism 40 is configured to establish fluid communication of the control conduit 16 with the supply conduit 13 to cause displacement of the shut-off element 30 to the second position against the bias force. The mechanism 40 is configured to enable, for performance of the filling function and by means of the fluid communication of the supply conduit 13 and the control conduit 16, an increase of a gas pressure acting on a surface portion 37 of the shut-off element 30 to cause the displacement of the shut-off element 30 to the second position. The mechanism 40 is configured to, for performance of at least the pressure limiting function, fluidly communicate the control conduit 16 with the exhaust 15 to exhaust the control conduit 16 to enable the bias force to return the shut-off element 30 to the first position.

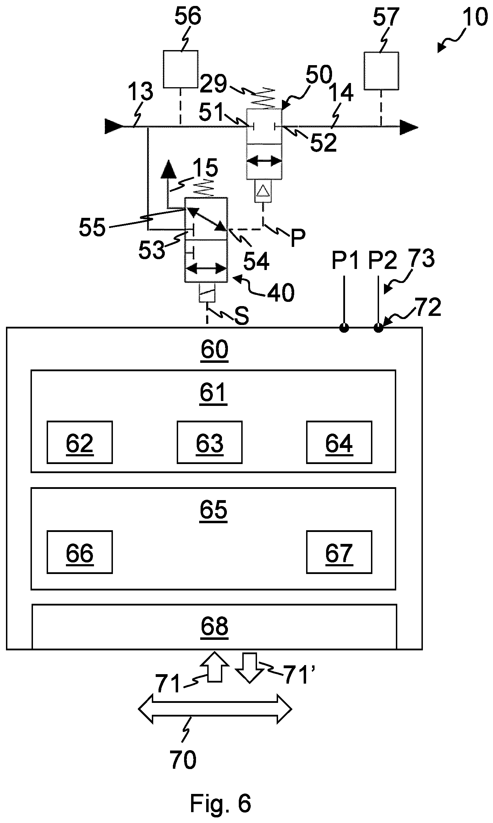

The functional and operational configuration of the pressure limiting valve 10 will be explained in more detail with reference to Fig. 2, Fig. 3, Fig. 4, Fig. 5, and Fig. 6. Fig. 3 is a further partial cross-sectional view of the pressure limiting valve 10 in a state in which the pressure limiting valve 10 is closed. Fig. 4 is a further partial cross-sectional view of the pressure limiting valve 10 in a state in which the pressure limiting starts to open. Fig. 5 is a pneumatic circuit diagram of the pressure limiting valve 10. Fig. 6 is a further pneumatic circuit diagram of the pressure limiting valve 10.

The pressure limiting valve 10 is configured such that the shut-off element 30 is displaceable along a displacement direction D. The displacement direction D may be parallel to or coincident with an axis A of the bias element 29. The shut-off element 30 has a surface portion 37, at least part of which is exposed in the annular disc-shaped volume 27. The surface portion 37 may be transverse, e.g., orthogonal, to the axis A. The pressure limiting valve 10 is configured such that the surface portion 37 is selectively exposed to the pressure in the supply conduit 13, depending on whether the solenoid 41 is energized or deenergized. The shut-off element 30 has a further surface portion 38. The pressure limiting valve 10 is configured such that the further surface portion 38 is continuously exposed to the pressure in the supply conduit 13, irrespective of whether the solenoid 41 is energized or deenergized. The further surface portion 38 may be transverse, e.g., orthogonal, to the axis A. The surface portion 37 and the further surface portion 38 may be parallel to each other. The bias element 29 is configured such that, for any pressure that is receivable in the supply conduit 13 in accordance with the specifications of the pressure limiting valve 10, a persistent force F applied by the pressure in the supply conduit 13 onto the further surface portion 38 has a magnitude that is less than a magnitude of the bias force BF applied by the bias element 29 when the shut-off element is in the first position. The persistent force F may vary in magnitude but is applied as long as the gas G is received from a pressure gas source. Thus, in the configuration depicted in Fig. 3 in which the control conduit 16 and the annular disc-shaped volume 37 are exhausted to ambient pressure by fluid communication of the control conduit 16 with the exhaust and are sealed against the supply conduit 13 by the mechanism 40, the shut-off element remains in abutment against the valve seat 28. In order to open the valve, the mechanism 40 is configured to fluidly communicate the supply conduit 13 with the control conduit 16, and to seal the control conduit 16 from the exhaust 15. The pressure limiting valve 10 is configured such that, when the mechanism 40 fluidly communicates the supply conduit 13 with the control conduit 16, the pressure in the annular disc-shaped space 27 increases to (at least substantially) the pressure in the supply conduit 13. The resultant force F' applied by the gas onto the surface portion 37 is sufficient to, in combination with the persistent force F, overcome the bias force BF, resulting in a shut-off element displacement D" of the shut-off element 30 out of its first position. In order to ensure that the force F' applied onto the surface portion 37 plus the persistent force F applied to the further surface portion 38 are sufficient to overcome the bias force BF (i.e., have an aggregated magnitude that exceeds a magnitude of the bias force BF), the pressure in the supply conduit 13 may be evaluated to determine at what point(s) in time and/or pressure(s) the mechanism 40 is to fluidly communicate the supply conduit 13 with the control conduit 16.

The surface portion 37 and the further surface portion 38 may be dimensioned, in dependence on a working pressure or working pressure range for which the pressure limiting valve 10 is configured to be used (e.g., in accordance with the specifications of the pressure limiting valve 10), such that: a product of a further area of the further surface portion 38 and a maximum working pressure (i.e., a maximum pressure in the supply conduit 13) is less than the bias force BF; and a product of the minimum working pressure (i.e., a minimum of the pressure (e.g., 5 or 6 bars) in the supply conduit 13 attained while the supply conduit 13 receives pressure gas during field operation) and the total sum of an area of the surface portion 37 and of a further area of the further surface portion 38 is greater than the bias force BF.

Fig. 5 and Fig. 6 show pneumatic circuit diagrams of the pressure limiting valve 10. The pressure limiting valve 10 includes a combination of a pneumatically controllable valve 50, which comprises the shut-off element 30 as a valve body of the pneumatically operable valve 50, and the solenoid valve 40. The overall configuration of the pressure limiting valve 10 is that of an electrically controllable pressure limiting valve 10. The pneumatically controllable valve 50 may be a pneumatically controllable 2/2-way valve 50 having a supply port 51 in permanent fluid communication with the supply conduit 13 and having a circuit port 52 in permanent fluid communication with the circuit conduit 14. The 2/2-way valve 50 is controlled by a pressure P acting on the surface portion 37 of the shut-off element 30. The pressure limiting valve 10 is configured such that the solenoid valve 40 generates the pressure P by communicating the control conduit 16 selectively, and in an electronically controlled manner, with either one of the supply conduit 13 and the exhaust 15. The solenoid valve 40 may be an electrically controllable 3/2-way valve. The solenoid valve 40 has a first port 53 in fluid communication with the supply conduit 13, a second port 54 in fluid communication with the control conduit 16, and a third port 55 in fluid communication with the exhaust 15. The solenoid valve 40 is configured to receive a control signal S to control the solenoid 41. The control signal S is generated by control electronics 60, in dependence on a supply pressure P1 in the supply conduit 13 and in dependence on a circuit pressure P2 in the circuit conduit 14.

Fig. 6 schematically illustrates the control electronics 60. The supply pressure P1 may be sensed by a first pressure sensor 56. The first pressure sensor 56 may be integrated in the casing 11 of the pressure limiting valve 10, so as to be in fluid communication with the supply conduit 13. Alternatively, the first pressure sensor 56 may be provided separately from the casing 11. The pneumatic circuit pressure P2 may be sensed by a second pressure sensor 57. The second pressure sensor 57 may be integrated in the casing 11 of the pressure limiting valve 10 so as to be in fluid communication with the circuit conduit 14. Alternatively, the second pressure sensor 57 may be provided separately from the casing 11. The control electronics 60 may be configured to receive the supply pressure P1 and the pneumatic circuit pressure via one or several signal input(s) 72 to which the first pressure sensor 56 and/or the second pressure sensor 57 are connected via one or several signal line(s) 73, and/or via a data interface 68. The control electronics 60 comprises at least one programmable processing circuit 61. To perform the various functions disclosed herein, the at least one programmable processing circuit 61 may comprise one or several integrated circuits (ICs). The at least one programmable processing circuit 61may comprise any one or any combination of: a controller; a micro-controller; a processor; a micro-processor; field programmable gate arrays (FPGAs); an application specific integrated circuits (ASICs); a graphics processing unit (GPU); a tensor processing unit (TPU); a central processing unit (CPU).

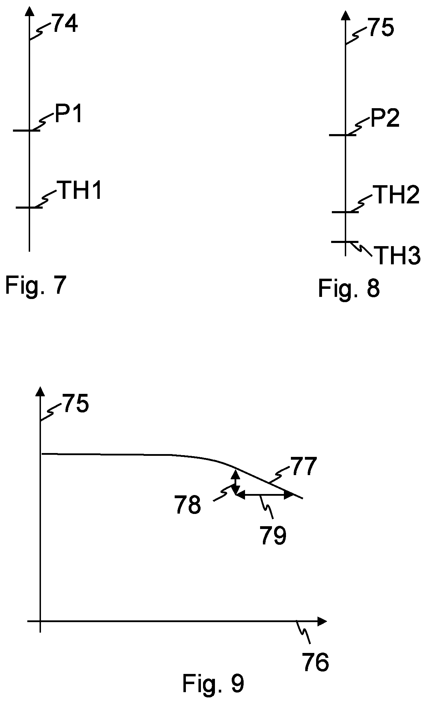

The at least one programmable processing circuit 61 is configured to perform a filling function logic 62 to determine at what time(s) the solenoid 41 is to be energized for establishing fluid communication of the supply conduit 13 and the circuit conduit 14. The filling function logic 62 may be configured to perform a first threshold comparison, to compare the supply pressure P1 to a first threshold TH1. The filling function logic 62 may be configured to energize, or cause energization of, the solenoid 41 to allow the gas to flow from the supply conduit 13 to the circuit conduit 14 based on a result of the first threshold comparison. In particular, fluid communication between the supply conduit 13 and the circuit conduit 14 may be established responsive to detecting that the supply pressure P1 is equal to or greater than the first threshold TH1. The first threshold TH1 is set such that the product of the first threshold TH1 times the sum of areas of the surface portion 37 and the further surface portion 38 is greater than a magnitude of the bias force BF applied by the bias element 29 when the shut-off element 30 is in the first position, i.e., in abutment against the valve seat 28. To perform the first threshold comparison, the at least one programmable processing circuit 61 may retrieve first threshold comparison data 66 stored in a non-volatile memory or storage 65 of the control electronics 60. The first threshold comparison data 66 may define the first threshold TH1. The first threshold comparison data 66 may comprise instruction code executable by the at least one programmable processing circuit 61 to perform the first threshold comparison, for performance of the filling function. Fig. 7 illustrates the first threshold comparison, in which the supply pressure P1 is compared to the first threshold TH1, both shown along a pressure axis 74.

The at least one programmable processing circuit 61 is configured to perform a pressure limiting function logic 63 to determine at what time(s) the solenoid 41 is to be deenergized for blocking fluid communication between the supply conduit 13 and the circuit conduit 14. The pressure limiting function logic 63 may be configured to perform a second threshold comparison, to compare the pneumatic circuit pressure P2 to a second threshold TH2. The pressure limiting function logic 63 may be configured to deenergize, or cause de-energization of, the solenoid 41 to block the gas G from flowing from the supply conduit 13 to the circuit conduit 14 based on a result of the second threshold comparison. In particular, fluid communication between the supply conduit 13 and the circuit conduit 14 may be established responsive to detecting that the pneumatic circuit pressure P2 is equal to or greater than the second threshold TH2. The second threshold TH2 is set such that the product of the second threshold TH2 times the area of the further surface portion 38 is less than the magnitude of the bias force BF applied by the bias element 29 when the shut-off element 30 is in the first position, i.e., in abutment against the valve seat 28. To perform the second threshold comparison, the at least one programmable processing circuit 61 may retrieve second threshold comparison data 67 stored in the non-volatile memory or storage 65 of the control electronics 60. The second threshold comparison data 67 may define the second threshold TH2. The second threshold comparison data 67 may comprise instruction code executable by the at least one programmable processing circuit 61 to perform the second threshold comparison, for performance of the pressure limiting function. Fig. 8 illustrates the second threshold comparison, in which the pneumatic circuit pressure P2 is compared to the second threshold TH2, both shown along a pressure axis 75.

The at least one processing circuit 61 may be configured to control, while the pressure limiting valve 10 is closed to perform the pressure limiting function, the solenoid 41 to selectively set the pressure limiting valve 10 to the opened state for refilling gas into the pneumatic circuit. The pressure limiting function logic 63 may be configured to compare the pneumatic circuit pressure P2 to a third threshold TH3 to determine at what points in time and/or pressure(s) the solenoid 41 is to be energized for refilling the pneumatic circuit. Fig. 8 illustrates the threshold comparison of the pneumatic circuit pressure P2 to the third threshold TH3, shown along the pressure axis 75.

Preferably, the at least one programmable processing circuit 61 is configured to perform a protection function logic 64 to determine at what time(s) a protective action is to be taken responsive to detection of a gas leak in the pneumatic circuit. The at least one programmable processing circuit 61 may be configured to perform a leakage detection to detect a gas leak in the pneumatic circuit, by processing the pneumatic circuit pressure P2. For illustration, the at least one programmable processing circuit 61 may be configured to determine a rate of decrease in the pneumatic circuit pressure P2 to detect gas leakage in the pneumatic circuit. Responsive thereto, the at least one programmable processing circuit 61 is configured to deenergize, or cause de-energization of, the solenoid 41 for blocking fluid communication between the supply conduit 13 and the circuit conduit 14, and to provide control output 71' (e.g., via the data interface 68 or via an analog output) to cause a control action, e.g., related to a compressor in dependence on the detected leak. Fig. 9 illustrates operation of the protection function logic 64, which processes a function 77 representing the pneumatic circuit pressure P2 (shown along a pressure axis 75) as a function of time, with time being shown along a time axis 76. Leak detection may be performed by monitoring a rate of decrease of the pneumatic circuit pressure P2, which may be determined by a decrement 78 in the pneumatic circuit pressure P2 over a time interval 79.

The operation characteristics of the pressure limiting valve 10 are adjustable, without requiring a modification of the physical configuration of the pressure limiting valve 10. For illustration, the control electronics 70 may be configured to receive, via the data interface 68, data 71 comprising instruction code that is executable to perform the first threshold comparison (e.g., to compare the pneumatic circuit pressure P2 to the first threshold TH1) and/or the second threshold comparison (e.g., to compare the pneumatic circuit pressure P2 to the second threshold TH2 and/or the third threshold TH3). The control electronics 70 may store the instruction code in the non-volatile memory or storage 65 for subsequent execution. The data 71 may be received in various states, e.g., upon manufacture of the pneumatic system, during installation of the control electronics 60, or possibly even after the control electronics 60 has been installed in the commercial vehicle.

Referring again to Fig. 1, Fig. 2, Fig. 3, Fig. 4, Fig. 5, and Fig. 6, features that are preferably implemented in the pressure limiting valve 10 will be explained in more detail. Alternative or additional constructions may be realized in other embodiments. The casing 11 comprises a receptacle 17 in which the shut-off element 30 is slidably received. The receptacle 17 is closed by a cap 12. The cap 12 supports an end of the bias element 29. The cap 12 comprises a support structure 19 for retaining the end of the bias element 29 and preventing the end of the bias element 29 from moving in a direction transverse to the axis A along which the bias element 29 extends. The axis A may be a coil axis along which the spring forming the bias element 29 extends. The bias element 29 is received in the receptacle 17. The casing 11 comprises a further receptacle 18. The further receptacle 18 houses therein at least part of (e.g., all of) the solenoid 41, the solenoid valve body 42, and the solenoid valve spring 43 of the solenoid valve of the mechanism 40. The solenoid 41 comprises an electrical input 47 directly connected to electrical control lines 49, via which the solenoid 41 is electronically controllable. The mechanism 40 may be arranged in the casing 11 such that a solenoid valve body displacement direction D' is transverse (e.g., perpendicular) to the shut-off element displacement direction D. The mechanism 40 may be arranged in the casing 11 such that the solenoid valve body displacement direction D' is transverse (e.g., perpendicular) to the axis A of the coil spring of the bias element 29.

To selectively communicate the control conduit 16 with one of the supply conduit 13 and the exhaust 15, the mechanism 40 comprises several seals. For illustration, the mechanism 40 may comprise a first seal 44, which may be a first O-ring seal of the mechanism 40, that abuts on a first solenoid valve body facing wall portion 25 of the casing 11. The first solenoid valve body facing wall portion 25 may be co-axial with the supply conduit 13. The mechanism 40 may comprise a second seal 45, which may be a second O-ring seal of the mechanism 40, that abuts on a second solenoid valve body facing wall portion 26 of the casing 11. The second solenoid valve body facing wall portion 26 of the casing 11 may be co-axial with the supply conduit 13. A stepped surface may be interposed between the first solenoid valve body facing wall portion 25 and the second solenoid valve body facing wall portion 26 of the casing 11. The first seal 44 and the second seal 45 may be arranged such that an end opening of the control conduit 16 is interposed between the first seal 44 and the second seal 45. The mechanism 40 and the casing 11 are arranged such that displacement of the solenoid valve body 42, under action of the solenoid 41 and the solenoid valve spring 43, establishes fluid communication of the control conduit 16 with one of the supply conduit 13 and the exhaust 15, while sealing the control conduit 16 against the other one of the supply conduit 13 and the exhaust 15. The mechanism 40 may comprise one or several additional seals, such as a third seal 46 that is arranged such that an end opening of the exhaust 15 is interposed between the third seal 46 and the second seal 45, to ensure that the mechanism 40 is operative to establish fluid communication of the control conduit 16 with one of the supply conduit 13 and the exhaust 15, while sealing the control conduit 16 against the other one of the supply conduit 13 and the exhaust 15.

The receptacle 17 comprises a first receptacle portion 21 delimited by a first inner wall portion 22 of the casing 11, and a second receptacle portion 23 delimited by a second inner wall portion 24 of the casing 11. The shut-off element 30 may have an outer diameter that varies as a function of position along the axis A. The outer diameter of the shut-off element may vary in a step-wise fashion to provide at least three tubular outer surfaces with different outer diameters. The shut-off element may comprise a first element portion 31, a second element portion 32, and a third element portion 33, with an outer diameter of the first element portion 31 being smaller than that of the second element portion 32, and with an outer diameter of the second element portion 32 being smaller than that of the third element portion 33. The first element portion 31 is sized such that it is circumferentially spaced from the first inner wall portion 22, thereby defining an annular gap between the first element portion and the first inner wall portion 22 in the first receptacle portion 21. The second element portion 32 may comprise a first groove 34' in which a first O-ring seal 34 is arranged, to seal the first receptacle portion 21 from the annular disc-shaped volume 27. The third element portion 33 may comprise a second groove 35' in which a second O-ring seal 35 is arranged, to seal the annular disc-shaped volume 27.

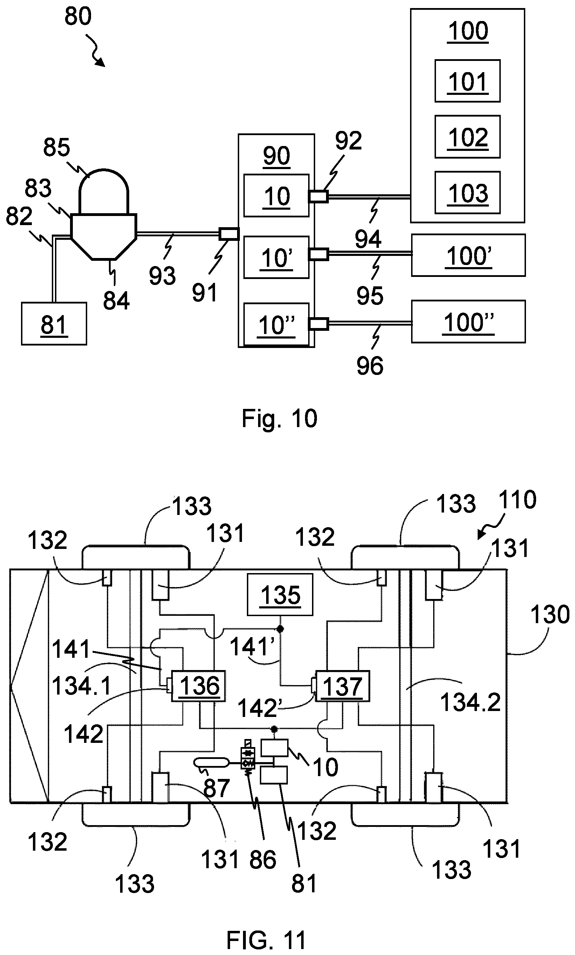

Fig. 10 shows a schematic block diagram representation of a commercial vehicle system 80. The commercial vehicle system 80 comprises a source of pressurized gas. The source of pressurized gas may comprise or may be a compressor 81. The source of pressurized gas may also comprise a reservoir. The commercial vehicle system 80 comprises an air dryer 83. The air dryer 83 comprises an air dryer body 84 and an air dryer cartridge 85 that can be attached to and detached from the air dryer body 84 in a destruction-free reversible manner. The air dryer 83 is directly or indirectly connected to the compressor 81 by a connection that comprises an air dryer connection line 82.

The commercial vehicle system 80 comprises a pneumatic circuit 100. The pneumatic circuit 100 comprises at least one pneumatic consumer 101. The pneumatic circuit 100 may comprise the pneumatic consumer 101 and one or several additional pneumatic consumers 102, 103. The pneumatic circuit 100 may be the pneumatic circuit of a pneumatic or electropneumatic suspension system, pneumatic or electropneumatic levelling system, pneumatic or electropneumatic door actuation system, pneumatic or electropneumatic sensor cleaning system, and/or pneumatic or electropneumatic braking system.

The commercial vehicle system 80 may comprise more than one pneumatic circuit. The commercial vehicle system 80 can comprise a second pneumatic circuit 100' and/or a third pneumatic circuit 100". Two or more of the pneumatic circuits 100, 100', 100" may provide redundancy for safety-critical systems, such as a braking system.

The commercial vehicle system 80 comprises a multi-circuit protection valve 90. The multi-circuit protection valve 90 comprises the pressure limiting valve 10 according to an aspect or embodiment. The multi-circuit protection valve 90 comprises a first connector 91 directly connected to a supply line 93, via which the supply conduit 13 receives the gas G from the source, e.g., from the air processing unit 80. The pressure limiting valve 10 comprises a second connector 92 directly connected to a circuit line 94, via which gas flows from the pressure limiting valve 10 to the pneumatic circuit 100.

The multi-circuit protection valve 90 may comprise one or several additional pressure limiting valves 10', 10" according to an aspect or embodiment. The supply conduits 13 of the several pressure limiting valves 10, 10', 10" may all be connected to receive gas received at the first connector 91. A second pressure limiting valve 10' may be directly connected to a second circuit line 95, via which gas flows from the second pressure limiting valve 10' to the second pneumatic circuit 100'. A third pressure limiting valve 10" may be directly connected to a third circuit line 96, via which gas flows from the second pressure limiting valve 10' to the third pneumatic circuit 100". multi-circuit protection valve 90 may comprise less than three or more than three pressure limiting valves according to an aspect or embodiment.

The several pressure limiting valves 10, 10', 10" may have a same hardware configuration. All of the several pressure limiting valves 10, 10', 10" may be configured such that, when the respective pressure limiting valve is closed, the pressure in the supply conduit 13 is unable to displace the shut-off element 30 as long as the control conduit 16 is in fluid communication with the exhaust 15. The several pressure limiting valves 10, 10', 10" may comprise pressure limiting valves having different operation characteristics. For illustration, the several pressure limiting valves 10, 10', 10" may comprise pressure limiting valves having different pressures at which the respective pressure limiting valve is closed for performance of the pressure limiting function, or different pressures at which the respective pressure limiting valve is intermittently opened for refilling of the pneumatic circuit to which the pressure limiting valve is connected. The different operation characteristics are attained by means of the control electronics 60.

The several pressure limiting valves 10, 10', 10" of a multi-circuit protection valve may have several control electronics 60, or one control electronics 60 may be provided to control the solenoids of at least two (e.g., all) of the several pressure limiting valves 10, 10', 10".

While the pressure limiting valves 10, 10', 10" are schematically shown as components that are physically separated from the air dryer 83, the commercial vehicle system 80 may comprise an air processing unit that comprises the air dryer 83 and one or several pressure limiting valves 10, 10', 10".

While the pressure limiting valves 10, 10', 10" are schematically shown as components integrated in a multi-circuit protection valve 90, this is not required. The commercial vehicle system 80 may comprise several pressure limiting valves 10, 10', 10", which may but do not need to be combined in a unit such as the multi-circuit protection valve 90.

Fig. 11 is a schematic representation of a commercial vehicle 130. The commercial vehicle 130 comprises a pneumatic system 110. The pneumatic system 110 is a pneumatic or electropneumatic braking system, e.g., an electronic brake system (EBS). The pneumatic system 110 configured as a braking system comprises at least one pneumatic system component, such as a front axle modulator 136 and/or a rear axle modulator 137. The vehicle 130 comprises a front axle 134.1 and a rear axle 134.2 or several rear axles. The vehicle 130 comprises several wheels 133. The vehicle 130 comprises one or several sensors, such as wheel speed sensors 132 associated with the several wheels 133. The pneumatic system 110 comprises several brake cylinders 131. The pneumatic system 110 comprises control electronics 135, such as a control unit 135, which is coupled to the front axle modulator 136 and the rear axle modulator 137 via at least one electric connection 141, 141'. The front axle modulator 136 comprises an electric interface 142 for communicatively interfacing with the control electronics 135. The rear axle modulator 137 comprises a further electric interface 142' for communicatively interfacing with the control electronics 135. The front axle modulator 136 has at least one discharge port in fluid communication with brake cylinders 131 for front axle wheels. The rear axle modulator 137 has at least one further discharge port in fluid communication with brake cylinders 131 for rear axle wheels. The pneumatic system 110 comprises a source of pressurized gas. The source comprises the compressor 81 and may optionally comprise a control valve 86 and a reservoir 87.

The pneumatic system 110 comprises the pressure limiting valve 10 according to any aspect or embodiment. The pressure limiting valve 10 may be comprised by a multi-circuit protection valve. The pressure limiting valve 10 is connected, via at least one line, to receive compressed gas provided by the compressor 81 and via at least one other line to the pneumatic circuit comprising the modulators 136, 137 and the brake cylinders 131.

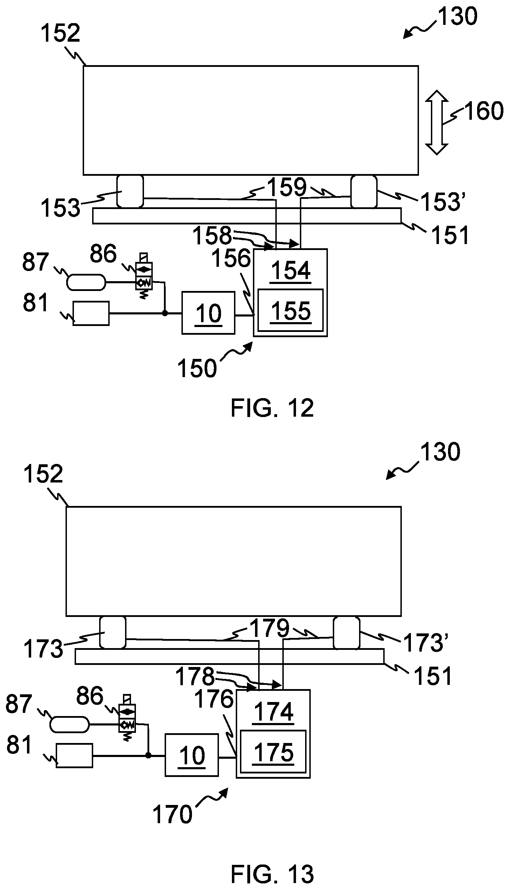

Fig. 12 is a schematic representation of a commercial vehicle 130 which comprises a pneumatic system 150 configured as an electro-pneumatic cabin leveling system. The electro-pneumatic cabin leveling system 150 is configured to change an inclination of a cabin 152 of the vehicle 130 relative to a chassis 151. The pneumatic system 150 comprises at least a pneumatic adjustment element 153 and a further pneumatic adjustment element 153', each of which is configured to change the inclination of the cabin 152. The pneumatic adjustment element 153 and the further pneumatic adjustment element 153' can be configured as inflatable air bags. The pneumatic system 150 comprises an electropneumatic control device 154. The electropneumatic control device 154 comprises at least two solenoid valves 155 (with the system of at least two solenoid valves 155 being indicated merely schematically in Fig. 12). The electropneumatic control device 154 is arranged to selectively energize the at least two solenoid valves 155 such that compressed air received at a compressed gas inlet 156 is supplied to one or both of the pneumatic adjustment element 153 and the further pneumatic adjustment element 153'. The electropneumatic control device 154 is arranged to selectively energize the at least two solenoid valves 155 such that one or both of the pneumatic adjustment element 153 and the further pneumatic adjustment element 153' is vented via exhaust port of the electropneumatic control device 154. The electropneumatic control device 154 comprises consumer ports 158, each of which is connected to one of the pneumatic adjustment elements 153, 153' via a connecting line 159. The configuration of the pneumatic system 150 allows different parts of the cabin 152 to be adjusted along an adjustment path 160 in order to adjust the inclination and/or height so that the cabin 152 has a desired attitude relative to a gravity direction. The solenoid valves 155 can be actuated in a conventional manner, responsive to a mechanical linkage, signals or data received by the electropneumatic control device 154. The pneumatic system 110 comprises a source of pressurized gas. The source comprises the compressor 81 and may optionally comprise the control valve 86 and the reservoir 97. The pneumatic system 110 comprises the pressure limiting valve 10 according to any aspect or embodiment, which is connected, via at least one line, to receive gas from the compressor 81 and, via at least one other line, to the pneumatic circuit comprising pneumatic consumers of the cabin levelling system.

Fig. 13 is a schematic representation of a commercial vehicle 130 comprising a pneumatic system 170 configured as an electro-pneumatic shock absorber system. The pneumatic system 170 comprises at least a pneumatic shock absorber 173 and a further pneumatic shock absorber 173', which are each arranged between a chassis 151 and a cab 152. The pneumatic shock absorber 173 and the further pneumatic shock absorber 173' can be configured as air bags whose pressure is adjustable. The pneumatic system 170 comprises an electropneumatic control device 174. The electropneumatic control device 174 comprises at least one solenoid valve or several solenoid valves 175 (which are shown merely schematically as a block in Fig. 13). The electropneumatic control device 174 is configured to selectively energize the at least one solenoid valve or the several solenoid valves 175 such that compressed gas received at a gas supply port 176 of the electropneumatic control device 174 is discharged to the pneumatic shock absorber 173 and the further pneumatic shock absorber 173', and/or such that the pneumatic shock absorber 173 and the further pneumatic shock absorber 173' can be vented via an exhaust port of the electropneumatic control device 174. The electropneumatic control device 174 comprises at least one consumer port 178, which is connected to the pneumatic shock absorber 173 and the further pneumatic shock absorber 173' via at least one connecting line 179. This configuration allows the pressure in the shock absorbers 173, 173' to be controlled using open-loop control and/or closed-loop control. The pneumatic system 110 comprises a source of pressurized gas. The source comprises the compressor 81 and may optionally comprise the control valve 86 and the reservoir 87. The pneumatic system 110 comprises the pressure limiting valve 10 according to any aspect or embodiment, which is connected, via at least one line, to receive gas provided by the compressor 81 and, via at least one other line, to the pneumatic circuit comprising pneumatic consumers of the suspension or shock absorber system.

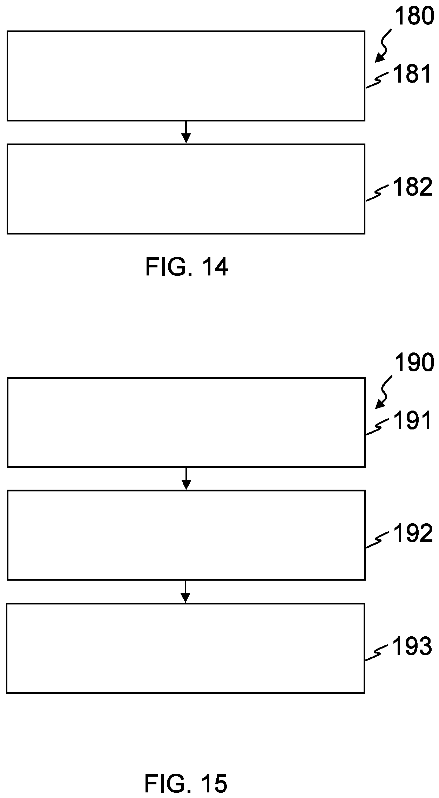

Fig. 14 is a flow chart of a method 180 of operating the pressure limiting valve 10. The method 180 may be performed automatically by or using the pressure limiting valve 10, the pneumatic system 90, 110, or the commercial vehicle.

The method 180 comprises a process block 181 of energizing the solenoid 41 of the pressure limiting valve 10 for performance of a filling function. Energizing the solenoid 41 may establish fluid communication of the control conduit 16 with the supply conduit 13. The resultant sum of the persistent force F and the force F' acting on the shut-off element 30 cause displacement of the shut-off element 30 against the bias force BF. This allows the gas G to flow from the supply conduit 13 to the circuit conduit 14. The solenoid 41 may be energized selectively in dependence on a result of a first threshold comparison, e.g., responsive to detecting that the supply pressure P1 is equal to or greater than a first threshold TH1.

The method 180 further comprises a process block 182 of deenergizing the solenoid 41 of the pressure limiting valve 10 for performance of a pressure limiting function, and/or, preferably, for performance of a protection function in case of gas leakage in the pneumatic circuit. Deenergizing the solenoid 41 causes the control conduit 16 to be vented to ambient pressure. This allows the bias force BF to return the shut-off element 30 to the first position in which the shut-off element abuts on the valve seat 28. The solenoid 41 may be deenergized selectively in dependence on a result of a second threshold comparison, e.g., responsive to detecting that the pneumatic circuit pressure P2 is greater than a first threshold TH2. Preferably, the solenoid 41 may also be deenergized selectively in response to detecting a gas leak in the pneumatic circuit. Alternatively or additionally to deenergizing the solenoid 41, process block 182 may comprise blocking, responsive to the gas leak detection, energization of the solenoid 41 when the solenoid 41 is already energized.

Process block 182 may comprise monitoring, by the control electronics 60, the pneumatic circuit pressure P2 and intermittently energizing the solenoid 41 for refilling of the pneumatic circuit responsive to detecting that the circuit pressure P2 has dropped to a lower limit TH3 for the pneumatic circuit pressure, to thereby refill the pneumatic circuit.

Fig. 15 is a flow chart of a method 190 of operating the pressure limiting valve 10. The method 190 may be performed automatically by or using the pressure limiting valve 10, the pneumatic system 90, 110, or the commercial vehicle.

The method 190 comprises a process block 191 of receiving, by control electronics 60, instruction code that is executable by at least one programmable processing circuit 61 of the control electronics to perform the filling function, the pressure limiting function, and, preferably, also the protection function and/or the refilling function.

The method 190 comprises a process block 192 of energizing the solenoid 41 of the pressure limiting valve 10 for performance of a filling function. The method 190 comprises a process block 193 of deenergizing the solenoid 41 of the pressure limiting valve 10 for performance of a pressure limiting function, and/or, preferably, for performance of a protection function in case of gas leakage in the pneumatic circuit. The process blocks 192, 193 may be performed as discussed for process blocks 181, 182 of the method 180. In the process blocks 192, 193, the at least one programmable processing circuit 61 executes the instruction code to perform at least the first threshold comparison and the second threshold comparison.

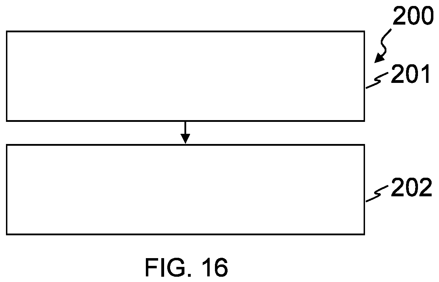

Fig. 16 is a flow chart of a use method 200 of using the pressure limiting valve 10, the commercial vehicle system 90, 110, the multi-circuit protection valve 90, the commercial vehicle 130, or the operation method according to an embodiment.

The use method 200 comprises a process block 201 of operating the pressure limiting valve 10. Operating the pressure limiting valve 10 may comprise selective energization and de-energization of the solenoid 41 for performance of the filling function, the pressure limiting function, and, preferably, of the protection function.

The use method 200 comprises a process block 202 of reducing the effects of pressure drifts by means of the electronic control of the pressure limiting valve 10.

While embodiments have been described with reference to the drawings, modifications and alterations may be implemented in other embodiments.

Various effects and advantages are attained by embodiments of the invention. Embodiments provide enhanced pressure limiting valve characteristics, e.g., with regard to pressure drift, in association with robustness and simplicity of the pressure limiting valve.

### List of Reference Numerals (part of the description)

- 10: pressure limiting valve
- 10': second pressure limiting valve
- 10": third pressure limiting valve
- 11: casing
- 12: cap
- 13: supply conduit
- 14: circuit conduit
- 15: exhaust
- 16: control conduit
- 17: receptacle
- 18: further receptacle
- 19: support structure
- 21: first receptacle portion
- 22: first inner wall portion
- 23: second receptacle portion
- 24: second inner wall portion
- 25: first solenoid valve body facing wall portion
- 26: second solenoid valve body facing wall portion
- 27: annular disc-shaped volume
- 28: valve seat
- 29: bias element
- 30: shut-off element
- 31: first element portion
- 32: second element portion
- 33: third element portion
- 34: first O-ring seal
- 34': first groove
- 35: second O-ring seal
- 35': second groove
- 36: engagement material portion
- 37: surface portion
- 38: further surface portion
- 40: mechanism
- 41: solenoid
- 42: solenoid valve body
- 43: solenoid valve spring
- 44: first seal
- 45: second seal
- 46: third seal
- 47: electrical input
- 49: electrical control lines
- 50: 2/2-way valve
- 51: supply port
- 52: circuit port
- 53: first port
- 54: second port
- 55: third port
- 56: first pressure sensor
- 57: second pressure sensor
- 60: control electronics
- 61: processing circuit(s)
- 62: filling function logic
- 63: pressure limiting function logic
- 64: protection function logic
- 65: non-volatile memory or storage
- 66: first threshold comparison data
- 67: second threshold comparison data
- 68: data interface
- 70: data bus
- 71: data received at data interface
- 72: signal input(s)
- 73: signal line(s)
- 74: first pressure axis
- 75: second pressure axis
- 76: time axis
- 77: supply pressure curve
- 78: variation
- 79: time interval
- 80: commercial vehicle system
- 81: compressor
- 82: compressor connection line
- 83: air dryer
- 84: air dryer body
- 85: air dryer cartridge
- 86: control valve
- 87: reservoir
- 90: multi-circuit protection valve
- 91: first connector
- 92: second connector
- 93: supply line
- 94: circuit line
- 95: second circuit line
- 96: third circuit line
- 100: pneumatic circuit
- 101: pneumatic consumer
- 102: second pneumatic consumer
- 103: third pneumatic consumer
- 100': second pneumatic circuit
- 100": third pneumatic circuit
- 110: electropneumatic braking system
- 130: commercial vehicle
- 131: brake cylinder
- 132: wheel speed sensor
- 133: wheel
- 134.1: front axle
- 134.2: rear axle
- 135: control electronics
- 136: front axle modulator
- 137: rear axle modulator
- 141: electric line
- 141': further electric line
- 142: electric interface
- 142': further electric interface
- 150: electropneumatic levelling system
- 151: chassis
- 152: cabin
- 153: adjustment member
- 153': further adjustment member
- 154: electropneumatic control device
- 155: solenoid valve(s)
- 156: supply port
- 158: discharge port(s)
- 159: pneumatic consumer lines
- 160: levelling adjustment path
- 170: electropneumatic shock absorbing system
- 173: pneumatic shock absorber
- 173': further pneumatic shock absorber
- 174: electropneumatic control device
- 175: solenoid valve(s)
- 176: supply port
- 178: discharge port(s)
- 179: pneumatic consumer lines
- 180: method
- 181, 182: process block
- 190: method
- 191, 192, 193: process block
- 200: method
- 201, 202: process block
- A: coil spring axis
- BF: bias force
- D: shut-off element displacement direction
- D': solenoid valve body displacement direction
- D": shut-off element displacement
- F: persistent force
- F': force
- G: gas
- P: pressure acting on shut-off element
- P1: supply pressure
- P2: pneumatic circuit pressure
- S: electric/electronic control
- TH1: first threshold
- TH2: second threshold
- TH3: third threshold

## Claims

1. Pressure limiting valve (10) for a commercial vehicle (130), the pressure limiting valve (10) comprising:
a casing (11), comprising: a supply conduit (13) configured to receive gas (G), a circuit conduit (14) configured to provide the gas (G) to a pneumatic circuit (100; 131, 136, 137; 153, 153', 154; 173, 173', 174) of the commercial vehicle (130), a control conduit (16), and an exhaust (15);
a shut-off element (30) disposed in the casing (11), the shut-off element (30) being displaceable between a first position in which the shut-off element (30) is configured to block the gas (G) from flowing from the supply conduit (13) to the circuit conduit (14) and a second position in which the shut-off element (30) is configured to allow the gas (G) to flow from the supply conduit (13) to the circuit conduit (14);
a bias element (29) configured to apply a bias force (BF) to the shut-off element (30) to bias the shut-off element (30) into the first position; and
a mechanism (40) that is electronically controllable and configured to cause a displacement of the shut-off element (30) for selective performance of at least: (a) a filling function of providing the gas (G) to the circuit conduit (14); and (b) a pressure limiting function of limiting pressure in the pneumatic circuit (100; 131, 136, 137; 153, 153', 154; 173, 173', 174); the mechanism (40) comprising a solenoid (41) disposed in or projecting into the casing (11) and
being configured to, for performance of the filling function, establish fluid communication of the control conduit (16) with the supply conduit (13) to cause displacement of the shut-off element (30) to the second position against the bias force (BF), wherein the mechanism (40) is configured to enable, by means of the fluid communication, an increase of a gas pressure acting on a surface portion (37) of the shut-off element (30) to cause the displacement (D") of the shut-off element (30) to the second position; and
being configured to, for performance of at least the pressure limiting function, fluidly communicate the control conduit (16) with the exhaust (15) to exhaust the control conduit (16) to enable the bias force (BF) to return the shut-off element (30) to the first position.

2. Pressure limiting valve (10) of claim 1, further comprising control electronics (60) configured to control the solenoid (41) based on at least one pressure(P1, P2) selected from a group comprising: a supply pressure (P1) sensed by a first pressure sensor (56); a pneumatic circuit pressure (P2) sensed by a second pressure sensor (57).

3. Pressure limiting valve (10) of claim 2, wherein the control electronics (60) comprises a non-volatile memory and/or storage unit (65) configured to store threshold comparison data (66, 67) that specify at least one threshold comparison, wherein the control electronics (60) is configured to perform the at least one threshold comparison of the at least one pressure (P1, P2) to determine at what points in time and/or pressure(s) the solenoid (41) is to be energized and/or de-energized.

4. Pressure limiting valve (10) of claim 3,
wherein the at least one threshold comparison is configurable to adjust operation of the pressure limiting valve (10); and/or
wherein the mechanism (40) is configured to establish fluid communication of the control conduit (16) with the supply conduit (13) to cause the displacement (D") of the shut-off element (30) to the second position for performance of a refilling function, based on the at least one threshold comparison.

5. Pressure limiting valve (10) of claim 3 or claim 4, wherein the control electronics (60) comprises a data interface (68) and is configured to adjust the threshold comparison data (66, 67) based on data (71) received at the data interface (68).

6. Pressure limiting valve (10) of any one of claims 3 to 5, wherein the threshold comparison data (66, 67) comprises instruction code (66, 67) that is executable by at least one programmable circuit of the control electronics (60).

7. Pressure limiting valve (10) of any one of claims 2 to 6, wherein the threshold comparison data (66, 67) comprises a first threshold (TH1), the at least one pressure (P1, P2) comprises the supply pressure (P1), and the control electronics (60) is configured to energize the solenoid (41), based on a comparison of the supply pressure (P1) and the first threshold (TH1), for performance of the filling function.

8. Pressure limiting valve (10) of any one of claims 2 to 7, wherein the threshold comparison data (66, 67) comprises a second threshold (TH2) different from the first threshold (TH1), the at least one pressure (P1, P2) comprises the pneumatic circuit pressure (P2), and the control electronics (60) is configured to deenergize the solenoid (41), based on a further comparison of the circuit pressure (P2) and the second threshold (TH2), for performance of the pressure limiting function.

9. Pressure limiting valve (10) of any one of claims 2 to 8,
wherein the at least one pressure comprises the pneumatic circuit pressure (P2, 77), and the control electronics (60) is configured to perform a gas leak detection based on the pneumatic circuit pressure (P2, 77) and to, responsive to the gas leak detection: (a) deenergize the solenoid (41); and/or (b) block energization while the solenoid (41) is deenergized; and/or
wherein the pressure limiting valve (10) comprises the first pressure sensor (56) and the second pressure sensor (57).

10. Commercial vehicle system (80; 110; 150; 170), comprising:
a gas source (81; 81, 83, 84; 81, 86, 87);
a pneumatic circuit (100; 131, 136, 137; 153, 153', 154; 173, 173', 174); and
the pressure limiting valve (10) of any one of the preceding claims, wherein the gas source (81; 81, 83, 84; 81, 86, 87) is in direct or indirect fluid communication with the supply conduit (13), and wherein the pneumatic circuit (100; 131, 136, 137; 153, 153', 154; 173, 173', 174) is in direct or indirect fluid communication with the circuit conduit (14).

11. Commercial vehicle system (80) of claim 10, further comprising one or several additional pneumatic circuits (100', 100") connected to receive gas from the gas source (81), wherein the pressure limiting valve (10) is configured to, in case of failure of the pneumatic circuit (100), block fluid communication between the supply conduit (13) and the circuit conduit (14) to isolate the pneumatic circuit (100) from the gas source (81) and thereby ensure a target working pressure in the one or several additional pneumatic circuits (100', 100").

12. Commercial vehicle (130), comprising the pressure limiting valve (10) of any one of claims 1 to 9 and/or the commercial system (80; 110; 150; 170) of claim 10 or claim 11.

13. Method of operating a pressure limiting valve (10) for a commercial vehicle (130), the pressure limiting valve (10) comprising: a casing (11), the casing (11) comprising a supply conduit (13) configured to receive gas, a circuit conduit (14) configured to provide the gas (G) to a pneumatic
circuit (100; 131, 136, 137; 153, 153', 154; 173, 173', 174) of the commercial vehicle (130), a control conduit (16), and an exhaust (15); a shut-off element (30) disposed in the casing (11), the shut-off element (30) being displaceable between a first position in which the shut-off element (30) blocks the gas (G) from flowing from the supply conduit (13) to the circuit conduit (14) and a second position in which the shut-off element (30) allows the gas (G) to flow from the supply conduit (13) to the circuit conduit (14); a bias element (29) that applies a bias force (BF) to the shut-off element (30) to bias the shut-off element (30) into the first position; and a mechanism (40) that is electronically controllable and the comprises a solenoid (41) disposed in or projecting into the casing (11); wherein the method comprises:
establishing, by the mechanism (40) and for performance of a filling function in which the gas (G) flows from the supply conduit (13) to the circuit conduit (14), fluid communication of the control conduit (16) with the supply conduit (13) and thereby causing displacement (D") of the shut-off element (30) to the second position against the bias force (BF), wherein the mechanism (40) enables, by means of the fluid communication, an increase of a gas pressure acting on a surface portion (37) of the shut-off element (30) that causes the displacement (D") of the shut-off element (30) to the second position; and
fluidly communicating, by the mechanism (40) and for performance of at least the pressure limiting function, the control conduit (16) with the exhaust (15) to exhaust the control conduit (16) to enable the bias force (BF) to return the shut-off element (30) to the first position.

14. Method of claim 13, further comprising controlling, by control electronics (60), the solenoid (41) based on at least one pressure threshold comparison, wherein the control electronics (60) is configured to enable adaptation of the at least one pressure threshold comparison in dependence on characteristics of the pneumatic circuit (100; 131, 136, 137; 153, 153', 154; 173, 173', 174) and/or of a gas source (81; 81, 83, 84; 81, 86, 87) from which the supply conduit (13) receives the gas (G).

15. Method of claim 13 or claim 14, wherein the pressure limiting valve (10) is the pressure limiting valve (10) of any one of claims 1 to 9.
